# EUROPEAN PATENT SPECIFICATION

(11) **EP 0 895 419 B1**
(45) Date of publication and mention of the grant of the patent: **26.06.2002**
(21) Application number: 98119317.0
(22) Date of filing: 29.10.1993
(51) Int. Cl.: H04N 7/16, H04N 7/173

(54) **Billing system for services provided via radio communications**
System für die Gebührenabrechnung von über Funk übertragenen Diensten
Système de facturation pour des services transmis par radio

(30) Priority: 30.10.1992 JP 31593892; 06.11.1992 JP 32261592; 27.11.1992 JP 34167192; 12.01.1993 JP 2061193; 16.03.1993 JP 8256193; 06.08.1993 JP 21529093
(43) Date of publication of application: 03.02.1999
(62) Divisional of application: 93117605.1
(73) Proprietor: RICOS CO., LTD., Miyakojima-ku, Osaka (JP)
(72) Inventor: Tsumura, Mihoji, Miyakojima-ku, Osaka (JP)
(74) Representative: Hering, Hartmut, Dipl.-Ing.

(56) References cited:
- EP-A- 0 128 555
- EP-A- 0 180 460
- EP-A- 0 489 385
- WO-A-85/00718
- WO-A-89/09528
- WO-A-91/06160
- US-A- 4 751 732

## Description

The present invention is directed to technical arrangements which provide the efficient billing system of service rate on an individual-piece-of-information basis or on a unit-of-information basis in a variety of information service ranging from music to video to text including news by means of radio communications, particularly by satellite communications. The present invention discloses a system in which receivers are prevented from their unauthorized use of information delivered through radio communications, so that information service fees are efficiently billed and then collected. The present invention discloses a system in which when a receiver fails to pay information service fees within a predetermined time of period, his terminal is disabled under the control of a host station, an information provider, and thus implements a technique which helps the information provider manage the operation of information service in an effective manner.

Radio broadcasting, television broadcasting, and satellite communications using communications satellites are now in widespread use. Billing service fees and then collecting them in a timely manner are the major problem associated with radio communications, because radio communications are not provided with the comparable system that is normally used by telephone networks where communications are performed on the basis of handshake under the control of telephone exchanges. In television broadcasting, it is common and established practice to bill and collect fees on each television set based on the assumption that concerned channels are selected and watched on the television set by viewers or users since it was installed. There are some systems, now in use, of satellite broadcasting service, in which signals are scrambled before transmission, and the user terminal is equipped with a de-scrambler which de-scrambles the received signal. In this case, a predetermined monthly rate of fee is billed when the de-scrambler is installed.

The first system described above, however, suffers poor performance in collecting information service fees, because payment of the fees is entirely dependent on the user's own will. The second system of using a de-scrambler puts the burden of installing the de-scrambler on the receiver, incurring extra cost on him. This can restrict the commercial expansion of the number of subscribers.

The conventional fee systems are generally a fixed amount fee per month system, which does not allow fees to be flexibly set depending on the type of information and does not allow fees to be paid at a flexible timing. This prevents the information provider from intensively broadcasting costly piece of information only from the commercial point of view. On the other hand, if the information provider limits the broadcasting of popular information or programs, no commercial expansion in subscription is expected.

To guard against unauthorized use of information in the conventional fee system for information service through bidirectional communications over a telephone network, a user terminal sends and uploads to its host station a request for use message of about 64-bit long including both a user identification number and an information identification number. In response to the request for use message, the host station sends an authorization signal to the user terminal. The authorization signal includes, in its bit stream of about 96-bit long, authorization number, user identification number, terminal number and information identification number to assure safety of communications. This system offers the advantage that a short period of time is sufficient enough to communicate data for fee charging, because the amount of the data is so small. On the other hand, the system suffers a very serious problem: the data are simple enough for a third party to easily decode to cheat on legitimate authorization numbers.

No problem will be presented as long as the exchange of data between the user terminal and the host station is one of the procedures legitimate to regulations concerned. An authorized exchange of data, if performed otherwise, however, leads to illegal use of information. More specifically, the host station is unable to manage fee billing with various pieces of information remaining exploited with fee uncollected, when a user terminal initiates a verification procedure with ill intention or when an authorization signal originates at any terminal other than the host station. Furthermore, this system requires at each information service the verification that fees have been correctly paid, complicating the procedure for information service and putting an additional burden onto both the user terminal and the host station. Thus, when a user accesses the host station several times in succession for a plurality of information services, each time extra verification step should be completed. This adds to extra time to connect time, and the host station suffers degradation in efficiency in terms of traffic.

WO-A-89/09528 discloses a television pay-per-view system in which fees are calculated at the host, and viewing access of a receiver is controlled in accordance with a time allowance.

WO-A-85/00718 discloses a system for secure TV transmissions in which a user's receiver may include a counter for accumulating the charges for programs viewed. Access to viewing is controlled on the basis of a comparison in the receiver between viewing charges and a purchased sum of credit whose value is transmitted from the host to the receiver and stored. Each transmitted program is provided with a program number so as to enable a discrimination between programs that may be viewed once and programs that may be viewed a plural number of times for one charge unit.

EP-A-0 128 555 discloses a system similar to the one disclosed in WO-A-85/00718, in which system each program may be associated with a particular (i.e. individual) cost/charge value.

EP-A-0 180 460 discloses a still further similar system wherein a user is charged per program, irrespective of the elapsed time.

US-A-4 751 732, which document is considered as being the most relevant prior art document, discloses a chargeable broadcast system in which transmissions from a broadcasting station are accompanied by control data. The control data may include an ID "CH" for identifying the broadcasting station, data for representing the program category, and data "MO" for representing the fees such as the fees per unit for the currently broadcast program. Conditional access of the receiver to the transmissions is controlled on the basis of the received control data and of a comparison result obtained using an IC card in which credit data are stored and compared with data representative of the accumulated viewing fees. The disclosed credit performs the function of a utilization memory and a fee calculation unit.

It is an object of the present invention to provide a system for transmitting data from a transmitter to a receiver and for billing the data, which system allows a proper billing of individual pieces of information with a host station not necessarily collecting a monthly fee from a user.

According to the present invention there is provided a system as set out in claim 1. Preferred embodiments are subject matters of claims 2 to 10.

There is provided a main unit made up of a transmitter and a host station computer which stores various types of data, and a receiver unit for executing process in response to the various types of data. The data frame transmitted by the main unit is tagged with identification code indicative of type of data. The receiver unit stores, in its built-in utilization status memory, identification code corresponding to the executed data from among received data. In accordance with the conversion data transmitted at regular intervals from the main unit, the system processes the identification code stored to determine periodically service fees.

In the system described above, the main unit is linked with the receiver units through radio communications, typically satellite communications, and karaoke data (karaoke is "the practice of singing to recorded backing music as a form of relaxation, usually in a bar," Longman Dictionary of English Language and Culture), video game data, and digitized video data are exchanged therebetween. A receiver unit stores, in its utilization status memory, identification data associated with processed and executed data from among the various types of data transmitted from the main unit and bases fee calculating on the stored identification data. Conversion data transmitted at regular intervals from the main unit contains fee information for each identification data, and fees are calculated periodically by comparing the conversion data with the stored identification data.

Another arrangement stores the identification code corresponding to executed data out of the data received by the receiver unit, into the utilization status memory of the receiver unit, determines the frequency of utilization of each identification code, and designates results as frequency data. The receiver unit is linked over a telephone line with a billing device which is provided in parallel with the main unit in order to store a data table on fee data for each identification code. The receiver unit uploads the frequency data accumulated in the utilization status memory at regular intervals to the billing device which, in turn, calculates information service fees at regular intervals referring to the data table.

One technical aspect unique to the above arrangement is that the billing device is provided in parallel with the main unit. The billing device has thus the function of calculating service fees at regular intervals for each receiver unit. The receiver unit stores, into its utilization status memory, the frequency of use (frequency of occurrence) for identification codes associated with processed and executed data out of the data from the main unit, and the frequency data are used as a base for fee calculating. The data table of the billing device functions as a reference table for fee calculating, the frequency data uploaded onto the billing device are processed referring to the data table in order to calculate information service fees at regular intervals.

One technical aspect of another arrangement is that the data frames of data from the main unit are dispersed with identification codes for different types of data, and a read/write device used for an IC card is included in the receiver unit. The receiver unit accumulates the identification codes of executed data, writes information on the accumulated billing data of identification codes onto the IC card inserted in the read/write device, debits information service fees to the IC card account, or writes service fees directly onto the IC card.

The IC card read/write device disposed in the receiver unit thus functions to read the contents stored in the RAM contained in the IC card and to write new data onto the RAM. In an embodiment of the present invention, the IC card stores data utilization history for billing information service fees, or current account of the IC card when used as a so-called prepaid card. In the arrangement in which data utilization history is stored, those data are sent to the main unit where its billing device executes fee calculation. In the arrangement in which the IC card functions as a prepaid card, service fees are determined on the basis of the data table stored in the receiver unit, and then the updated account is written onto the IC.

Another example employs an arrangement in which the receiver unit is provided with an utilization status counter to store identification codes associated with executed data out of the data received by the receiver unit, and in which service fee data are obtained by correlating the fee conversion data delivered at regular intervals by the transmitter side, with the identification codes stored in the utilization status counter. The obtained information service fee data are then converted to frequency data, on the basis of CATV rate, by the CATV adaptor control circuit of the user terminal; the receiver unit uploads the frequency data to an CATV provider station; the CATV station downloads certain information corresponding to the frequency data to the receiver unit; and this downloading replaces the CATV information service rate.

The CATV adaptor control circuit converts the service fee data to the frequency data on the basis of the CATV rate, and uploads the frequency data to the CATV provider station through the CATV adaptor. The frequency data are the one which the receiver unit uses to notify the CATV provider station of the fee amount according to the frequency data. The CATV provider handles the frequency data separately from normal billing process of pay information, and downloads the information relevant to the frequency data to the receiver unit. Thus, information service fee handling via CATV functionally replaces the information service fee handling for satellite communications. Other advantages, structures and meritorious features of the present invention will be more fully understood from the following description of the invention, along with accompanying drawings. It should be noted that the term "radio communications" used herein include both satellite communications and terrestrial communications, and that the term "radio broadcasting" used herein include both satellite broadcasting and terrestrial broadcasting.

### BRIEF DESCRIPTION OF THE DRAWINGS

Fig.1 is a block diagram showing generally an example of a system for transmitting data.
Fig.2 is a block diagram showing a main unit.
Fig.3 is a block diagram showing a receiver unit.
Fig.4 is a block diagram showing generally another example.
Fig.5 is a block diagram showing generally an embodiment of the present invention.
Fig.6 is a block diagram showing the receiver unit of Fig. 5.
Fig.7 is a block diagram of another embodiment of the receiver unit of Fig.5.
Fig.8 is a block diagram showing generally a further example.
Fig.9 is a block diagram of the receiver unit of Fig.8.
Fig.10 is a block diagram illustrating a coding process of the receiver unit.
Fig.11 is a block diagram illustrating a service disabling process due to unpaid bills in the receiver unit.
Fig.12 is a block diagram of the host station corresponding to the process in Fig.11.

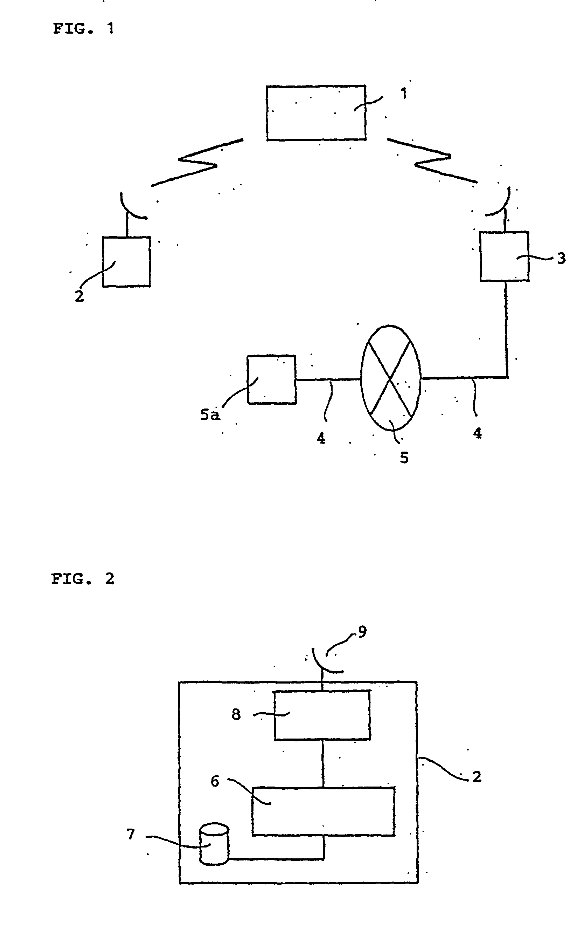

Referring now to the drawings, examples of a system for transmitting data are discussed below. Fig.1 is a block diagram showing a first example, wherein satellite communications are here employed. The first embodiment of the present invention comprises a communications satellite 1 at a determined orbit, main unit 2 at the transmitter side functioning as a host station, a receiver unit 3, a billing channel 4, a public telephone network 5, and a telephone exchange 5a. The receiver unit 3 is linked with the telephone exchange 5a over the billing channel 4. Although a single receiver unit 3 is shown in Fig.1, a plurality of receiver units, in practice, may be provided in a parallel configuration. As shown in Fig.2, the main unit 2 essentially comprises a host computer 6, a database 7 under the control of the host computer 6, a transmitter 8, and an antenna 9 for satellite communications. A multichannel broadcasting is possible by setting up a plurality of channels if the transponder of the satellite 1 is fully made use of. In this case, the main unit 2 assigns different types of information to different channels, and transmits multichannel signals to the communications satellite 1. A variety of information may be assigned to the plurality of channels. For example, in karaoke music, a tune is assigned to one channel with its associated words assigned to another; in a computer video game, data and programs are assigned to separate channels. In these examples, the user is afforded a choice which channel to select.

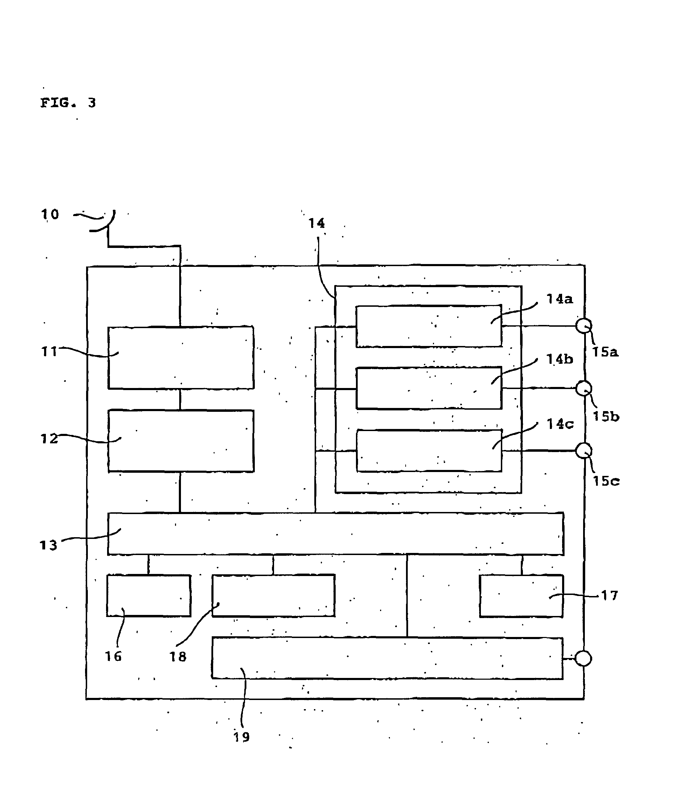

Referring now to Fig.3, the construction of the receiver unit 3 is detailed below. Via an antenna 10, a tuner 11 receives satellite signals which the communications satellite 1 broadcasts back after receiving and then amplifying signals received from the main unit 2. Signals to be broadcast can be image data such as video signals and digitized video signals, and digital signals such as data required for the operation of karaoke or computer video games. It is assumed that the tuner 11 has a structure capable of a parallel operation with a bandwidth sufficient enough to accommodate a plurality of predetermined channels. A received data processing block 12 having memory means such as a buffer memory performs essential functions, such as saving temporarily each data when multichannel signals are simultaneously processed, processing data streams, such as headers and footers, which constitute a communication protocol, and extracting required information from the received data. A control CPU 13 controls the entire receiver unit 3, controls the received data processing block 12 according to a processing program stored, and outputs required data. A signal processing block 14 comprises, in a parallel configuration, a video signal processing circuit 14a, a karaoke signal processing circuit 14b, and video game signal processing circuit 14c, with each circuit processing the corresponding type of received signal. The signal processing circuits have respective output terminals 15a, 15b, and 15c. To pick up the video output, a display unit (not shown) is simply connected to the video output terminal 15a. To enjoy computer video games, a video game machine (not shown) is simply connected to the video game output terminal 15c. A control panel and a display panel are designated 16 and 17, respectively. Keys and buttons disposed on the control panel 16 are manipulated to select desired information referring to an information listing presented on the display panel 17. Described above are the essential construction of the receiver unit 3 required to process received information. Although this example uses satellite communications, no essential difference is made if terrestrial communications are employed. In this case, however, the communications satellite 1 is not needed and thus dispensed with, and the type of antenna needs changing to meet frequency bands desired.

Discussed next is a billing arrangement for information service. In Fig.3, an utilization state memory 18 counts and accumulates the frequency of utilization for each of the signal processing circuits 14a, 14b and 14c of the signal processing block 14. Accumulated results are used to calculate service fees at regular intervals. Information available for counting the frequency of utilization is dispersed in the form of coded data into bit streams to be transmitted. Such information as identification code indicative of types of information, for example, karaoke and video game, is inserted into the header of a data frame. Signals received by the tuner 11 are processed by the control CPU 13, then the control panel 16 selects type of data to be processed, and selected type of data is then processed by corresponding signal processing circuit 14a, 14b or 14c. Data processed here along with their type of data information are stored in the utilization status memory 18. The transmitter side sends at regular intervals the information of unit price per service for each type of data as conversion data. The control CPU 13 correlates the conversion data with identification code on the frequency of utilization stored in the utilization status memory 18, and processes and calculates information service fees at regular intervals. In this embodiment herein, although different unit prices apply to different types, a unitary price applies as long as the type of data remains the same. Alternatively, different prices may be set from service to service on an individual basis rather than by type of data. The utilization status memory 18 extracts only identification code from data frames, and organizes and stores them in the form of a data table. Receiving, from the transmitter side, the conversion data which are data streams representing unit prices, the utilization status memory 18 refers to the data table to calculate service fees to determine the total amount. In the example, data indicative of unit prices are not stored in advance in the receiver unit 3 but fed as transmitted data from the transmitter side so that unit prices may be updated as necessary.

The total amount determined by the receiver unit 3 is output via a modem 19 for data communication, and then delivered to a telephone exchange 5a over the billing channel 4. As an operational example of the billing channel 4, a known system may be used wherein the telephone exchange functions as the agent for an information provider by collecting from the user the amount of value equivalent to a duration during which the user received an information service, and the telephone exchange then pays the amount with the agent service charge deducted, to the information provider (the transmitter side). In this case, when billing the user, the public telephone company adds the information service fees onto the normal telephone rate. Although in this embodiment, the information service fees are added to the telephone exchange 5a's own telephone rate, alternatively, the user may access to the host computer 6 of the transmitter side over the telephone line in order to notify the transmitter side of the information service fees at regular intervals. In this example, it is essential that the user side calculates the information service fee based on the conversion data which is fee data sent by the transmitter side and that the user side sends results to the transmitter side.

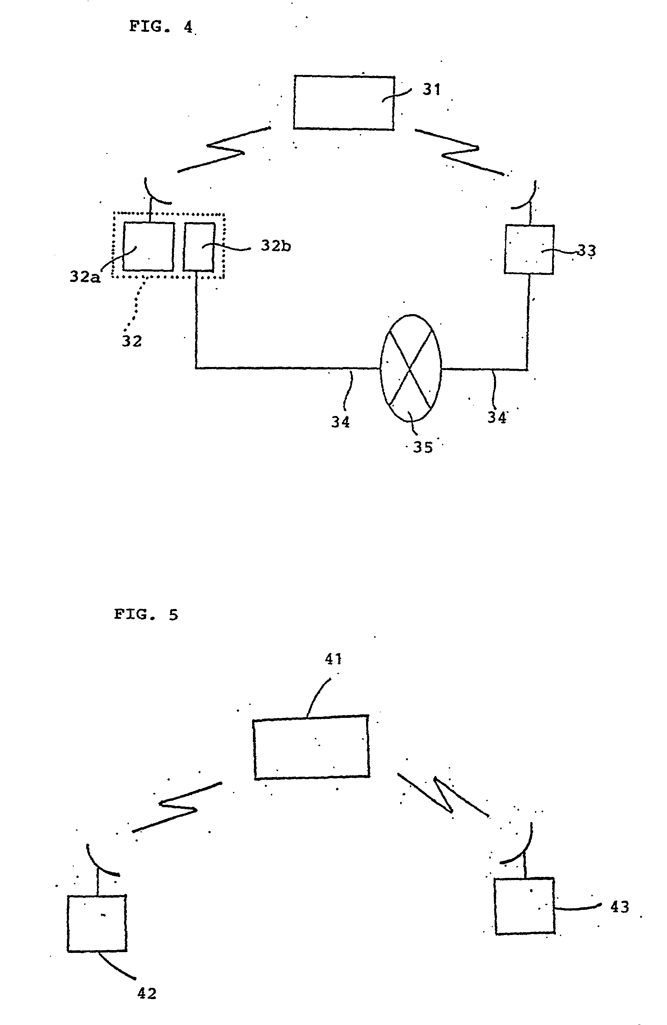

A second example is now discussed. Fig.4 is a block diagram showing generally the second example, which again employs satellite communications. Shown in Fig.4 are a communications satellite 31, a transmitter unit 32, a main unit 32a for transmitting information in a signal, a billing device 32b for calculating service fees, a receiver unit 33, a telephone line 34, and a telephone network 35. The billing device 32b and the receiver unit 33 are connected with each other via the telephone network 35. The main unit 32a here is identical to that of the first example in Fig.2 in terms of structure. Also, the receiver unit 33 is identical to that of the first example in Fig.3.

Described below is an arrangement for billing when information received by the receiver unit 33 is used. The basic technique of the second example is roughly the same to that of the first example. The technical difference is that, in connection with data already processed, a utilization status memory 18 stores frequency of use for each type of data. When for example, for a certain period of time, karaoke was used N times and a video game was enjoyed M times, the utilization status memory 18 stores, as frequency data, a karaoke code followed by N, and video game code followed by M. In addition, not only to set different prices from type to type of data but also to set different prices from one information service to another depending on their contents, each piece of information is tagged with an identification code. The frequency of each of different identification codes is stored. This allows finer billing, which reflects more degrees of information on importance and popularity. In this example, the communications satellite is employed. Like the first example, however, the essential construction of the example remains unchanged even if other radio communications means such as FM communications is substituted.

As already described, the frequency of utilization data stored in the utilization status memory 18 (Fig.3) which is an internal block of the receiver unit 33, are output via the modem 19 for data communications, and then delivered, via the telephone line, to the billing device 32b under the control of the transmitter unit 32. There are two methods available for the billing device 32b to receive the frequency data:
The first method is that the receiver unit 33 accesses to the billing device 32b to send the frequency data. The second method is that the billing device 32b accesses to the receiver unit 33 to cause the receiver unit 33 to upload the frequency data stored at that moment to the billing device 32b. In this example, either method may be employed. The first method, however, provides a simpler arrangement in which the receiver unit 33 accesses the billing device 32b at regular intervals controlled by the internal clock of the control CPU inside the receiver unit 33. When the number of subscriber receiver units 33 is large, however, congested access timings substantially degrade traffic if each receiver unit 33 attempts to access independently. On the other hand, although it requires a more complex arrangement, the second method of the billing device 32b accessing to the receiver unit 33 allows the billing device 32b to control the access timings of the receiver units 33. Thus, the second method eliminates the problem of traffic. The number of subscriber receiver units may be taken into consideration to select between both methods.

The frequency data are uploaded to the billing device 32b as described above, and information service fees are calculated for each receiver unit 33. The billing device 32b has a data table containing unit price for each identification code. When the frequency data are input, the billing device 32b correlates them with the data table to calculate sums. Summed information service fees are charged to each user via appropriate means as described in the first embodiment.

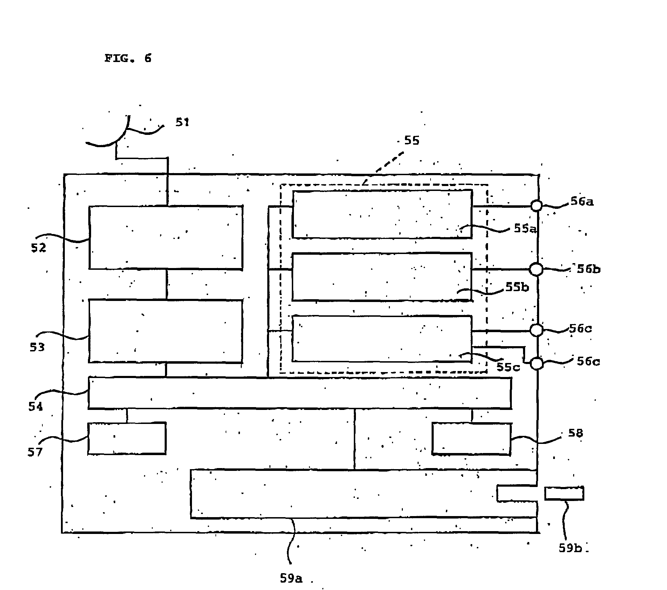

A third example is now discussed. Fig.5 shows generally the third example as an embodiment of the present invention. In Fig.5 again, a satellite is employed for communications. Shown in Fig.5 are a communications satellite 41, main unit 42 for transmitting information in data, and a receiver unit 43. The main unit 42 has the same basic construction as that for the first example. The internal structure of the receiver unit 43 is shown in Fig.6. The basic structure of the receiver unit 43 in Fig.6 is almost identical to that of the receiver unit of the first embodiment. The receiver unit 43 essentially comprises a receiving antenna 51, a tuner 52, a received data processing block 53, a control CPU 54, and a signal processing block 55. The signal processing block 55 comprises, in a parallel configuration, a video signal processing circuit 55a, a karaoke signal processing circuit 55b, a video game signal processing circuit 55c, and the like with each circuit processing the corresponding type of received signal. The signal processing circuits have respective output terminals 56a, 56b, and 56c. Also included in the receiver unit 43 are a control panel 57 and a display panel 58. The memory area under the control of the control CPU 54 has a data table containing the information service fee for each piece of information. Calculating the information fees is performed referring to this data table. Also included in the receiver unit 43 are an IC card read/write device 59a and an IC card 59b which can be inserted in the IC card read/write device 59a. Written in advance onto the IC card 59b are the user information such as user's name, address, date of birth, and the like in a prepaid card, a maximum available amount. If receiving information service is attempted with the IC card 59a not inserted into the IC card read/write device 59a, the received data processing block 53 automatically discards the data received via the receiving antenna 51 without going to processing.

Detailed next is how billing operation is performed when the user uses the receiver unit for information. The IC card 59b stores a maximum available amount of value, and has the same function as a so-called prepaid card. When a user purchases an IC card, its maximum available amount corresponding to a buying price has already been written onto the IC card. Thus, collecting operation is in fact completed at the time of purchase. When the IC card is inserted, the IC card read/write device 59a reads the currently available amount and the received data processing block 53 remains in a standby state after verifying the currently available amount.

Information for counting the frequency of utilization is inserted into bit streams of the transmitted data from the main unit 42. For example, identification code indicative of types of information, for example, karaoke and video game, is inserted into data frames. Out of signals received by the tuner 52, desired information signal is selectively processed by the corresponding signal processing circuit 55a, 55b or 55c. When reception of the desired information is completed, the control CPU 54 calculates the information service fee corresponding to the identification code referring to the data table for information fee. A next available amount is calculated by deducting the above information service fee from the currently available amount stored in the IC card 59b, and the next available amount is written on the IC card 59b via the IC card read/write device 59a. The figure on the IC card is appropriately updated by subtracting the information service fee from the previously resulted available amount and by using the result as the next available amount.

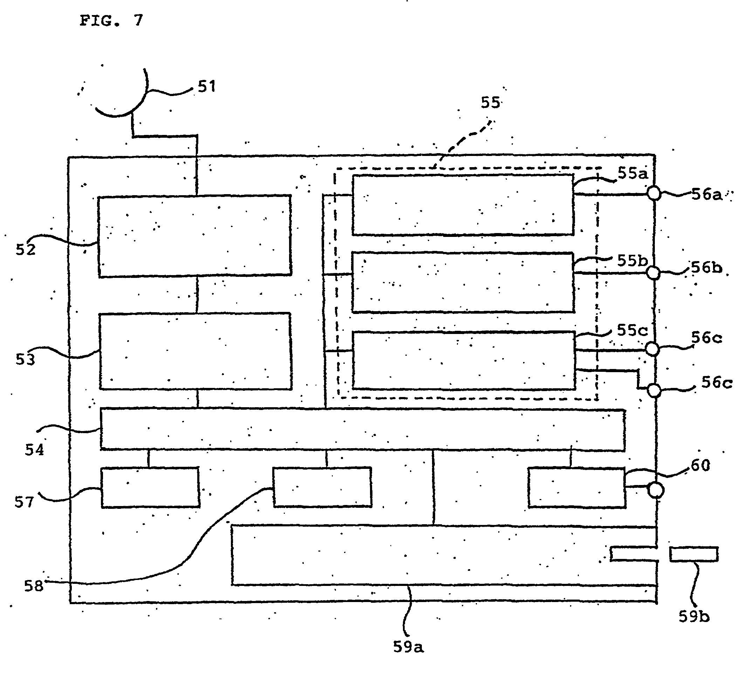

A system described below may be contemplated as a modification to the third example. The system is constructed of the communications satellite, the main unit, and the receiver unit in Fig.4 with the receiver unit being structured as in Fig.7. The same reference numerals in Fig.7 and Fig.6 have the same functions. The difference is that a modem 60 for data communications is introduced in Fig.7. An IC card read/write device 59a counts the frequency of utilization for each of the signal processing circuits in the signal processing block 55, and stores the utilization status data into the IC card 59b. Unlike the method employed in the third example, the available amount of the IC card 59b is not updated, but the frequency data of an identification code of information service utilized are written onto the IC card. The transmitter side determines at regular intervals the information fees based on the accumulated data on the IC card. When, for example, for a certain period of time, karaoke was used N times and video game was enjoyed M times, the IC card 59b stores, for example, karaoke N and video game M, as frequency data. In addition, not only to set different prices from type to type of data but also to set different prices from one information service to another depending on their contents, each piece of information is tagged with identification code. The frequency of identification codes is stored. This allows finer billing, which reflects more degrees of information on importance and popularity.

The frequency data for each identification code stored in the IC card 59b are memory protected by a backup battery even if the IC card 59b is pulled out of the IC read/write device 59a. When the IC card 59b is inserted for the next time, the previous data stored are output via the modem 60 for data communications, and then delivered to the billing device 32b under the control of the transmitter side through the telephone line 34 in Fig.4. There are again two methods available for the billing device 32b to receive the frequency data as already described in connection with Fig.4. Either of both methods is optionally selected.

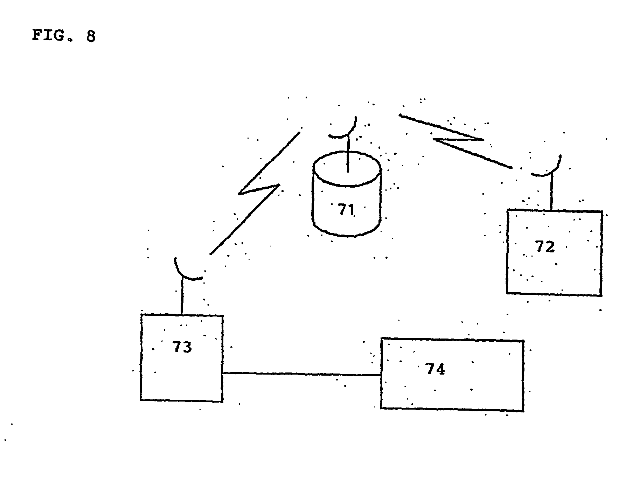

Described next is the billing system in which CATV network is used to bill and collect the information fee serviced by a broadcasting satellite or a communications satellite. Shown in Fig.8 are a communication satellite 71, a transmitter unit 72 for transmitting various pieces of information complying with a variety of media, and a receiver unit 73. A two-way communication link is established between the receiver unit 73 and a CATV station 74. The basic construction of the transmitter unit 72 is identical to that of the transmitter unit in Fig.2.

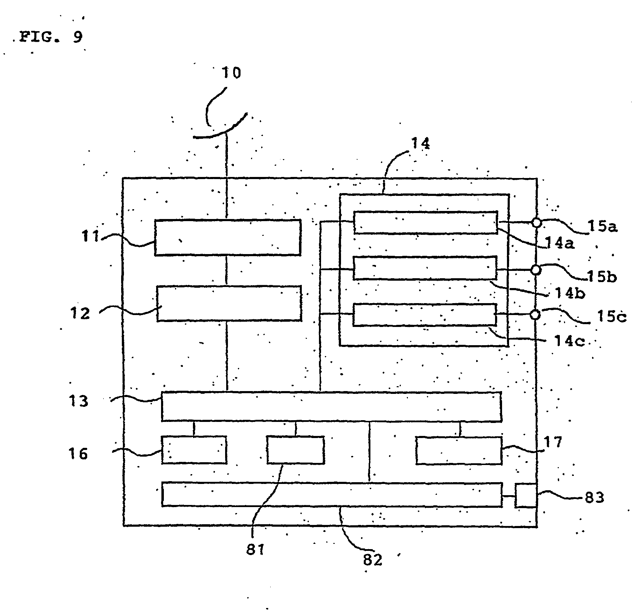

The internal structure of the receiver unit 73 is discussed referring to Fig.9. The same reference numerals are commonly used in both Fig.3 and Fig.9 to denote the same blocks with the same respective functions. A utilization status counter 81 counts the frequency of service utilization at each of the signal processing circuits 14a, 14b and 14c of the signal processing block 14, namely the frequency of service utilization per type of data, and then stores resulted frequency data. Calculated using the stored data are fee data based on the fee conversion data transmitted at regular intervals by the transmitter unit 72. Information to count the frequency of service utilization, i.e., information of identification codes to count the frequency of service utilization at each signal processing circuit is inserted into the transmitted signal from the transmitter unit 72. Identification codes indicative of types of information, for example, karaoke and video game, are inserted into data frames. Data received by the tuner 11 are processed by the control CPU 13, and the control panel 16 is manipulated to select desired data, and those data are processed by the corresponding signal processing circuits 14a, 14b and 14c. In connection with processed data only, the utilization status counter 81 stores the frequency of service utilization per type of data, namely the accumulated number of identification codes. When, for example, for a certain period of time, karaoke was used N times and a video game was enjoyed M times, the utilization status counter 81 stores, for example, karaoke N and video game M, as frequency data. Accumulated identification codes and the fee conversion data transmitted at regular intervals by the transmitter unit 72 are correlated and processed referring the data table, and fee data are obtained as the information service fee at regular intervals.

Upon completion of the calculation, the fee data are sent to a CATV adaptor control circuit 82. The CATV adaptor control circuit 82 performs data conversion to the fee data on the basis of frequency, as a parameter, in the information service fee system of the CATV the user subscribes. For example, one time use is assumed to be equal to the amount x. For example, when the total amount for the information fee for the satellite communications is 100x, the CATV adaptor control circuit 82 converts the amount 100x into 100 times as frequency data. The frequency data are tagged with predetermined unique ID assigned to a user terminal 73, and uploaded to a CATV station 74 via a CATV adaptor 83.

The CATV station 74 is provided with a dedicated billing channel in addition to normal information channels. This dedicated billing channel is not intended to positively present information such as programs information to the user. Rather, the dedicated billing channel is intended to collect the information service fees against data received and processed by the user terminal (receiver unit) 73. When the user terminal 73 uploads the frequency data to the CATV station 74, the CATV station 74 downloads information corresponding to the frequency data to the user terminal 73 via the CATV network from the dedicated billing channel. For example, each piece of information handled by the dedicated billing channel may be constructed of different contents by 1 time, 10 times, or 100 times. When the frequency data, for example, 120 times, are uploaded, the CATV station 74 selects an information file equivalent to 100 times and twice an information file equivalent to 10 times, and combines and sends these information files to the user terminal 73. This allows the information service fee in the CATV network to substitute for the information service fee in the satellite communications. As described above, since the dedicated billing channel is not intended to positively supply information, exchange of predetermined images between the CATV station and the user terminal is sufficient. Any means is acceptable as long as it allows the user of the receiver unit to verify that collecting information fees are duly performed. The type of data and length of the information serviced do not affect the present invention.

It is common practice that in the normal billing system for the CATV 74, a subscriber is billed for programs the subscriber watched or for the overall time during which the subscriber was serviced with information. Namely, a subscriber of the CATV network is billed according to the frequency of information service which the subscriber gets. In this example, the existing CATV network is employed. Predetermined data according to the frequency data are sent to the receiver unit, and the subscriber is billed for the amount equal to the CATV service fee as if a subscriber has got CATV service. Specifically, in this embodiment, the receiver unit accesses to the CATV station 74 to notify the CATV station 74 of the frequency of information service provided and then to allow the CATV station 74 to collect information service fees of satellite communications for the information service provider. For the purposes of the present invention it is sufficient for the CATV station 74 to calculate service fees based on the frequency data. When the frequency data are uploaded from the receiver unit 73, it is sufficient enough for the CATV station 74, regardless of the magnitude of the frequency data, to download, in response, simple and fixed information which allows the receiver unit 73 to acknowledge at least that the CATV station 74 is at a billing state. The CATV station 74 calculates the service fee for each receiver on the frequency data, and bills it. The process of billing service fee is here repeated for clarity. Fee data calculated by the receiver unit 73 are converted to CATV network service fee as frequency data, and the CATV operator station collects from the subscriber the amount of money including the its own CATV service fee plus converted information service fee by radio communications for the radio communications information provider. The CATV operator station then deducts its own CATV service fee and agent service charge from the amount collected, and pays the balance to the operator of the transmitter unit 72, i.e., the information provider.

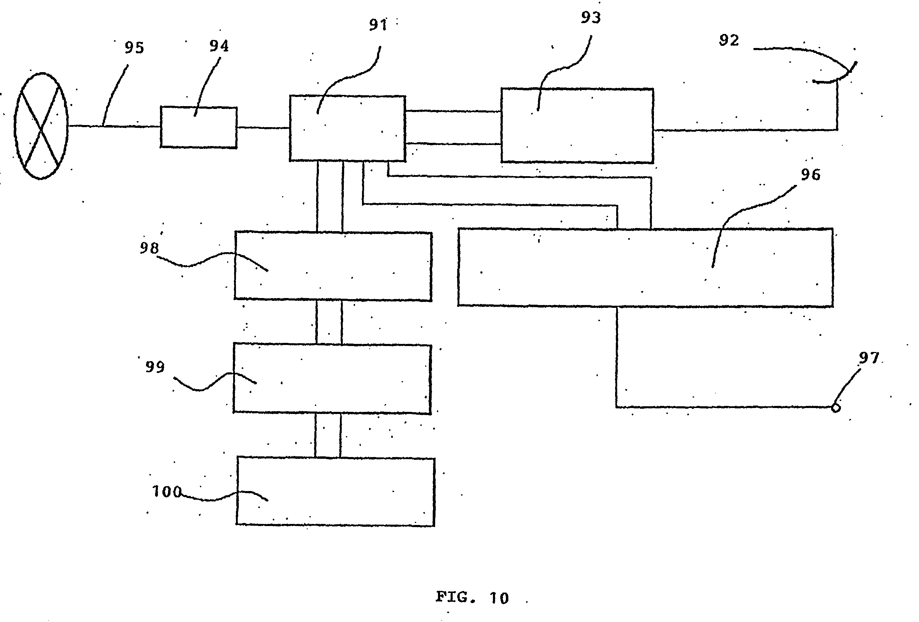

Discussed next is a coding technique which is used to prevent the unauthorized use of information data transmitted by means of satellite communications or satellite broadcasting as described above. Fig.10 is a block diagram of a receiver unit for coding. A CPU 91 processes transmitted and received data while controlling the entire receiver unit. Signals in the form of radiowaves that are received via an antenna 92 are detected or demodulated, and digitized by a receiver block 93, and digitized data streams are input to the CPU 91. The CPU 91 also controls a series of output steps comprising controlling a modem 94 and uploading a billing signal to a host station over a telephone line 95. In this example, various types of information as data stream are delivered by a host station via radio communications such satellite communications and, billing information is exchanged between the host station and the receiver unit via the modem 94 over the telephone line 95. An information reproducing block 96 performs required reproduction and display processing depending on types of data steams, such as video game data, karaoke data, video data and text data. The processed data are then output to a proper output device (not shown) via an output terminal 97. If the receiver block 93 directly feeds its digital code output, the information reproducing block 96 cannot process it. The digital code output becomes meaningful data only when it is processed by the CPU 91 under the control of the control program. A control program memory 98 stores a program which allows the CPU 91 to process the data stream output from the receiver block 93 according to the type of data. To retrieve the control program from the control program memory 98, the CPU 91 needs to notify the host station of which type of data it is going to process, and then to receive an authorization signal from the host station. This course of action is determined by the contents of a code sequence memory 99 for storing a code sequence and a code program memory 100 for storing a code program. The host station can thus perform an appropriate billing operation since the receiver unit notifies the host station of what type of data to be processed prior to data processing. The sequence stored in the code sequence memory 99 can be executed not only at the user terminal but also at the host station.

Described below is a protocol to be written onto the code sequence memory 99.

An example of the sequence for coding an information data stream is as follows:
1: adding a 1 to the value at the even-byte position, and shifting the value at an odd-byte position to the right by 1 bit.
2: subtracting a 2 from the value at the even-byte position, and shifting the value at the odd-byte position to the left by 1 bit.
...
...
100: Code program
...
...
499: multiplying the value at the uppermost 4 bits by 2, and adding a 1 to the value at the lower 4 bit
500: shifting the value at the upper 4 bits to the right, and shifting the value at the lower 4 bits to the left.

"Code program" is assigned to 100. If the code program itself is transmitted or received like in this case, the code program memory 100 is not required. To shorten a transfer time, the code program memory 100 is required to store the code program. Thus, if a short transfer time is more important to save time and not to degrade traffic over the telephone line, the code program is preferably stored in the code program memory 100. If it is not, the code program is received and transmitted each time. Either of both arrangements is optionally selected to meet the system adopted.

To use received data, the user terminal accesses to the host station over the telephone line 95 to send the bit stream of a "request for use message" consisting of "authorization number, user identification number, terminal number, information identification number." In response, the host station sends the above-described code sequence to the user terminal over the downlink telephone line after verifying that the request for use message is in such a correct order that the user terminal has no unpaid account and that there are no errors in the user identification number and other data. The code sequence number not always proceeds in a random order but in a descending order, and furthermore the order is periodically updated by the timer of the host station. The period of update is arbitrarily set by the host station side. This arrangement requires extra transfer time due to increased amount of data, compared with the conventional arrangement in which the code sequence numbers are sent as they are. This arrangement, however, offers more security on information. The host station constantly monitors current traffic, and sometimes disables the updated code sequence from being transmitted when traffic is congested beyond a threshold. This avoids degrading traffic attributable to coding to some extent. The receiver unit resends to the host station the request for use message coded according to the code sequence provided by the host station. The host station decodes the received coded request for use message, following the inverse sequence of the code sequence. The host station then compares the decoded request for use message with the previously received one. If both match, the host acknowledges that the receiver unit has performed the correct coding process, and then sends an authorization signal authorizing the use of information service to the receiver unit. This authorization signal is also coded according to the code sequence. After all the above steps have been successfully completed, the CPU 91 of the receiver unit is allowed to retrieve the control program from the control program memory 98. Based on the control program, the CPU 91 can process the data stream from the receiver block 93.

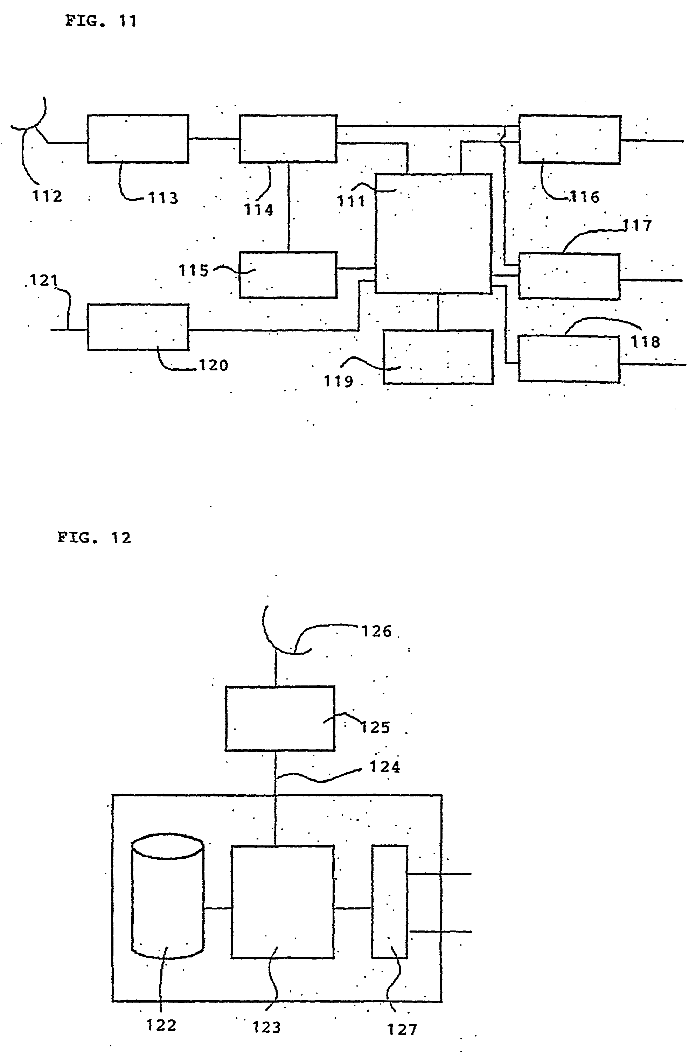

The coding technique described above prevents the user from free or unauthorized use of information service. With safety and usefulness assured by this technique, the information provider can handle information at ease using radio communications and radio broadcasting. Another security aspect to be considered is provision to disable a receiver unit if its owner fails to pay fees for a certain period of time. The coding technique is further discussed in this connection. Fig.11 shows a block diagram of a receiver unit for serving the above purpose. A terminal controller 111 includes as a core a CPU which controls the entire unit while processing transmitted and received data. Signals received in the form of radiowaves by an antenna 112 are frequency converted and then amplified by a converter 113, and detected, channel selected, and then A/D converted (if original transmitted signal is a digital signal), by a detector 114. If the received signal is scrambled, a de-scrambler 115 de-scrambles the output signal from the detector 114. If the received signal is not scrambled, the output signal from the detector 114 simply passes through the de-scrambler 115. When the received signal is an analog signal such as a video signal or an audio signal, the detector 114 delivers its output directly to a video signal converter 116 or an audio signal converter 117. The video signal converter 116 and the audio signal converter 117 give their outputs, to respective output devices such as a display unit or an amplifier. When the received signal is a digital video signal, it is processed by the terminal controller 111 which delivers its output as video data to the video signal converter 116. The video signal converter 116 converts the video data to the video signal for the output device. When the received signals are MIDI signals or PCM signals, they are data processed by the terminal controller 111. The processed data are output to the audio signal converter 117, which in turn converts the processed data into an analog audio signal for the display unit or an amplifier. When the received signal is other type of digital signal, it is delivered via an interface 118 to an external device with which the received signal is compatible. The detector 114 discriminates the received signal between a digital signal and an analog signal. A memory 119 contains both a ROM area for storing process sequence and data unique to each receiver unit and a RAM area working as a buffer memory for temporary storage. The code sequence already described is written onto the ROM area.

The billing system in this example is operated over a public telephone line 121 through a modem 120. Fig.12 is illustrates the host station in this example. A database 122 stores various information under the control of a host computer 123. When requested by a number of receiver units, the host computer 123 reads the corresponding individual data of each receiver unit from the database 122 in the order of request arrival or in a random manner without taking into consideration the order of request arrival, and sends the data to a ground station 125 over a dedicated line 124. The ground station 125 performs required modulation and conversion depending of desired types of radiowaves, such as modulation for satellites or FM modulation, and then transmits the modulated signal via an antenna 126. The database 122 includes a client information database which is updated as appropriate in connection with each receiver unit ID and information of whether each receiver owner has paid properly against information fees billed. A network controller 127 is connected to the receiver units over either a dedicated line or a public telephone line. A protocol for transmission and reception may be arbitrarily set. The principle of the present invention remains essentially effective regardless of whether the signal handled is analog or digital.

A series of data exchange is performed between the receiver unit and the host station, respectively essentially shown in Figs.11 and 12. To retrieve information which the receiver unit needs, the receiver unit makes a request over the telephone line to the host station which in turn search the database 122 for requested data and read it. The host station then sends requested data along with the ID of the requesting receiver unit via the ground station 125. In this case, if no match of ID is found, received data are prohibited from use, thus preventing a third party from unauthorized use of information. Such a technique is now in widespread use in online service of telephonic communications. Rather than adopting the technique unconditionally, this technique is modified by introducing a step of verifying due payment, wherein the verification step is performed independently of the request of the receiver unit. The verification step is detailed below. The receiver unit periodically accesses to the host station, independently of information request to the host station, and sends the receiver unit's unique ID stored in the memory 119 to the host station. The type of the memory 119 is preferably a flash ROM. The host station searches the client information database using the received ID as a retrieval guide, and sends results to the receiver unit. If the received ID is not found in the client information database with the received ID left unverified, the host station disconnects the line and terminates the verification step. When the host station recognizes the ID match, the host station verifies that information service fees including the one for last information service are already paid. When this verification confirms a fully paid status, the host station specifies, to the receiver unit, an updated service availability period, an authorization signal, and a next access time for payment status verification. In response, the receiver unit updates corresponding data in the memory 119. The receiver unit is thus allowed to access to the host station for information request and acquisition until the updated service availability period expires.

When the receiver unit's unique ID is correctly recognized but with the payment status unverified, in other words, when information service fees are found to be unpaid at due time, the host station specifies to the receiver unit an updated brief service availability period and a next access time for the verification of payment within the updated brief service availability period. The host station carries out the same verification step at the specified access time. If the client information database is not updated giving no indication that the information service fees are correctly paid, the host station sends a service disable signal to the receiver unit. An available method to disable the receiver unit is, for example, reprogramming the de-scrambling program written onto the de-scrambler 115. In addition, the host station never sends the ID of the receiver unit while it is disabled. Furthermore, to prevent unauthorized use of information service, by updating the de-scrambling sequence as appropriate, and notifying of the date and time for the start of the updated sequence, only receiver units which have duly paid information service fees have the capability of de-scrambling.

In this example, since the access time for payment status verification is important, the internal clock of the receiver unit is updated and corrected to the internal clock of the host station each time the receiver unit makes access to the host station. Even if the internal clock of the receiver suffers any error, it is not substantial because of correction at each access. This means that the host station can manage the receiver unit by monitoring whether it makes access as scheduled or not. The host station controls the receiver unit, by the service disable signal to the receiver unit after the elapse of a predetermined time tolerance from the moment the receiver unit fails to make access as scheduled. This technique is very useful to perform centralized management of the system.

## Claims

1. A system for transmitting data of different types by radio communications from a transmitter (8) to a receiver (3) and for billing the data, the system including a main unit (2) with said transmitter (8) and a database (7) for storing data of various types, and a receiver unit (3), wherein
a transmitted data frame is accompanied by a respective type ID;
said receiver unit (3) processes the received data in accordance with their identification code, i.e. type ID, and sequentially stores the type IDs of the received and processed data in an utilization status memory (18);
at intervals, said main unit (2) updates the receiver by transmitting conversion data which are service fees per unit of processed data for each different data type; and
at said intervals, service fees from the stored type IDs and said conversion data are calculated in said receiver unit (2, 12, 13),
**characterized in that**
said receiver unit (2, 12, 13) comprises a table in which said conversion data are stored for each piece of information and a CPU (54), said CPU (54) performing the calculation of service fees from the stored type IDs and said conversion data by referring to said table for information fee.

2. The system according to claim 1, wherein said radio communications are satellite communications (1) and/or terrestrial communications (5).

3. The system according to claim 1 or 2, wherein said system transmits karaoke data and computer video game data as said data of different types.

4. The system according to any of the preceding claims, wherein a plurality of receiver units (3) are provided in a parallel configuration.

5. The system according to any of the preceding claims, wherein said receiver unit (3) is connected to a public telephone network (4, 5, 5a).

6. The system according to any of the preceding claims, wherein the identification codes stored and accumulated in said receiver unit (3; 33) are frequency data which are made of each of different data type identification codes and its frequency of occurrence figure.

7. The system according to any of the preceding claims, wherein said receiver unit (43) comprises an IC card read/write device (59a) operating, in conjunction with an IC card, as said utilization status memory (58), and wherein the identification codes of utilized data are transferred to an IC card (59b) inserted into said IC card read/write device, for accumulation in said IC card.

8. The system according to claim 7, wherein when an available amount of value as fee data is written onto said IC card (59b) in advance, said receiver unit (43) is disabled when an accumulated information service fee exceeds said available amount of value.

9. The system according to claim 7 or 8, wherein a user's own ID is written onto said IC card (59b).

10. The system according to any of the preceding claims, wherein, in case said receiver unit (3; 33; 43) is connected (60) to a CATV network, said receiver unit converts calculated information service fees into frequency data and accesses to a CATV station (74) to notify the CATV station of the frequency of provided information services by uploading the frequency data to the CATV station so as to make the CATV to download to the receiver unit, in response, information which allows the receiver unit to acknowledge at least that the CATV station is at a billing state, and to allow the CATV station to calculate the service fee and, then, to collect information service fees from a subscriber.

## Patentansprüche

1. System zum Übertragen von Daten unterschiedlicher Typen durch Funkkommunikationen bzw. Radiokommunikationen von einem Sender (8) zu einem Empfänger (3) und zum Berechnen von Gebühren für die Daten, wobei das System eine Haupteinheit (2) mit dem Sender (8) und einer Datenbank (7) zum Speichern von Daten verschiedener Typen und eine Empfängereinheit (3) enthält, wobei
ein gesendeter Datenframe durch einen jeweiligen Typen-ID begleitet wird;
die Empfängereinheit (3) die empfangenen Daten gemäß ihrem Identifikationscode, d.h. dem Typen-ID, verarbeitet und die Typen-IDs der empfangenen und verarbeiteten Daten in einem Nutzungsstatusspeicher (18) sequentiell speichert;
die Haupteinheit (2) den Empfänger in Intervallen durch Senden von Umwandlungsdaten, die Servicegebühren pro Einheit von verarbeiteten Daten für jeden unterschiedlichen Datentyp sind, einem Updaten unterzieht; und
Servicegebühren von den gespeicherten Typen-IDs und den Umwandlungsdaten in den Intervallen in der Empfängereinheit (2, 12, 13) berechnet werden,
**dadurch gekennzeichnet, daß**
die Empfängereinheit (2, 12, 13) eine Tabelle, in welcher die Umwandlungsdaten für jedes Informationsstück gespeichert sind, und eine CPU (54) aufweist, wobei die CPU (54) die Berechnung von Servicegebühren aus den gespeicherten Typen-IDs und den Umwandlungsdaten durch Bezugnahme auf die Tabelle für eine Informationsgebühr durchführt.

2. System nach Anspruch 1, wobei die Funkkommunikationen Satellitenkommunikationen (1) und/oder terrestrische Kommunikationen (5) sind.

3. System nach Anspruch 1 oder 2, wobei das System Karaokedaten und Computer-Videospieldaten als die Daten von unterschiedlichen Typen sendet.

4. System nach einem der vorangehenden Ansprüche, wobei eine Vielzahl von Empfängereinheiten (3) in einer parallelen Konfiguration vorgesehen ist.

5. System nach einem der vorangehenden Ansprüche, wobei die Empfängereinheit (3) mit einem öffentlichen Telefonnetz (4, 5, 5a) verbunden ist.

6. System nach einem der vorangehenden Ansprüche, wobei die in der Empfängereinheit (3; 33) gespeicherten und akkumulierten Identifikationscode Frequenzdaten sind, die aus jedem von Identifikationscodes unterschiedlichen Datentyps und ihre Häufigkeit einer Auftrittsanzahl gebildet sind.

7. System nach einem der vorangehenden Ansprüche, wobei die Empfängereinheit (43) eine IC-Karten-Lese/Schreib-Vorrichtung (59a) aufweist, die in Verbindung mit einer IC-Karte als der Nutzungsstatusspeicher (58) arbeitet, und wobei die Identifikationscodes von genutzten Daten zu einer IC-Karte (59b), die in die IC-Karten-Lese/Schreib-Vorrichtung eingefügt ist, für eine Akkumulation in der IC-Karte transferiert werden.

8. System nach Anspruch 7, wobei dann, wenn eine verfügbare Wertemenge als Gebührendaten im Voraus auf die IC-Karte (59b) geschrieben ist, die Empfängereinheit (43) dann gesperrt wird, wenn eine akkumulierte Informationsservicegebühr die verfügbare Wertemenge übersteigt.

9. System nach Anspruch 7 oder 8, wobei eine einem Anwender eigene ID auf die IC-Karte (59b) geschrieben ist.

10. System nach einem der vorangehenden Ansprüche, wobei in einem Fall, in welchem die Empfängereinheit (3; 33; 43) mit einem CATV-Netz verbunden ist (60), die Empfängereinheit berechnete Informationsservicegebühren in Frequenzdaten umwandelt und auf eine CATV-Station (74) zugreift, um die CATV-Station über die Häufigkeit von gelieferten Informationsdiensten zu benachrichtigen, indem die Frequenzdaten zu der CATV-Station nach oben geladen werden, um die CATV-Station zu veranlassen, in Reaktion darauf Information zur Empfängereinheit herunterzuladen, welche Information zuläßt, daß die Empfängereinheit wenigstens bestätigt, daß die CATV-Station in einem Gebührenberechnungs- bzw. Abbuchungszustand ist, und um zuzulassen, daß die CATV-Station die Servicegebühr berechnet, und um dann Informationsservicegebühren von einem Teilnehmer zu sammeln.

## Revendications

1. Un système pour transmettre des données de différents types par radiocommunication depuis un émetteur (8) vers un récepteur (3) et pour facturer les données, le système incluant une unité principale (2) avec ledit émetteur (8) et une base de données (7) pour stocker les données de différents types, et une unité réceptrice (3), dans lequel
une trame de données transmise est accompagnée d'un identificateur de type respectif ;
ladite unité réceptrice (3) traite les données reçues selon leur code d'identification, c'est-à-dire leur identificateur de type, et stocke séquentiellement les identificateurs de type des données reçues et traitées dans une mémoire d'état d'utilisation (18);
à intervalles, ladite unité principale (2) met à jour le récepteur en transmettant des données de conversion qui sont des frais de services par unité de données traitées pour chaque différent type de données ; et
aux intervalles mentionnés, les frais de services basés sur les identificateurs de type stockés et lesdites données de conversion sont calculés dans ladite unité réceptrice (2, 12, 13),
**caractérisé en ce que** ladite unité réceptrice (2, 12, 13) comprend une table, dans laquelle lesdites données de conversion sont stockées pour chaque information, et une unité centrale (54), ladite unité centrale (54) effectuant le calcul des frais de services sur la base des identificateurs de type stockés et desdites données de conversion en se reportant à ladite table pour les frais appliqués aux informations.

2. Le système selon la revendication 1, dans lequel ladite radiocommunication est une communication par satellite (1) et/ou une communication terrestre (5).

3. Le système selon la revendication 1 ou 2, dans lequel ledit système transmet des données de karaoké et des données de jeux vidéo pour ordinateur comme données de différents types telles que mentionnées plus haut.

4. Le système selon l'une des revendications précédentes, dans lequel une pluralité d'unités réceptrices (3) sont prévues en une configuration parallèle.

5. Le système selon l'une des revendications précédentes, dans lequel ladite unité réceptrice (3) est connectée à un réseau de téléphones publics (4, 5, 5a).

6. Le système selon l'une des revendications précédentes, dans lequel les codes d'identification stockés et accumulés dans ladite unité réceptrice (3, 33) sont des données de fréquence composées de chacun des différents codes d'identification des types de données et de son chiffre de fréquence d'occurrence.

7. Le système selon l'une des revendications précédentes, dans lequel ladite unité réceptrice (43) comprend un dispositif de lecture / écriture avec carte à microcircuit (59a) fonctionnant, conjointement avec une carte à microcircuit, comme ladite mémoire d'état d'utilisation (58), et dans lequel les codes d'identification des données utilisées sont transférés vers une carte à microcircuit (59b) insérée dans ledit dispositif de lecture / écriture avec carte à microcircuit, pour accumulation dans ladite carte à microcircuit.

8. Le système selon la revendication 7, dans lequel, lorsqu'une quantité disponible de valeur comme donnée de frais est écrite à l'avance sur ladite carte à microcircuit (59b), ladite unité réceptrice (43) est désactivée lorsque des frais de services d'information accumulés dépassent ladite quantité disponible de valeur.

9. Le système selon la revendication 7 ou 8, dans lequel un identificateur personnel d'utilisateur est écrit sur ladite carte à microcircuit (59b).

10. Le système selon l'une des revendications précédentes, dans lequel, lorsque ladite unité réceptrice (3, 33, 43) est connectée (60) à un réseau de télédistribution (CATV), ladite unité réceptrice convertit les frais de services d'information calculés en données de fréquence et accède à une station CATV (74) pour notifier la station CATV de la fréquence des services d'information fournis en téléchargeant les données de fréquence vers la station CATV afin de faire en sorte que la CATV télécharge vers l'unité réceptrice, en réponse, des informations permettant à l'unité réceptrice de reconnaître au moins que la station CATV est à l'état de facturation, et de permettre à la station CATV de calculer les frais de services, puis de recouvrer les frais de services d'information auprès d'un abonné.
